# EUROPEAN PATENT APPLICATION

(11) **EP 3 095 848 A1**
(43) Date of publication of application: **23.11.2016**
(21) Application number: 16001160.7
(22) Date of filing: 20.05.2016
(51) Int. Cl.: C12G 1/06, C12G 3/04

(54) **METHOD FOR PREPARATION OF SPARKLING WINE COCKTAILS CONTAINING EDIBLE GOLD**

(30) Priority: 20.05.2015 ES 201500384
(71) Applicant: Francesc Xavier Carretero Pena, 08750 Barcelone (ES)
(72) Inventor: Francesc Xavier Carretero Pena, 08750 Barcelone (ES)

(57) **Abstract**

The present invention refers to the food industry. More specifically, the present invention refers to a method for preparation of cocktails which are based on sparkling wine, such as Cava, whereby it is possible to obtain at industrial cocktails containing edible gold in suspension, with a visual appearance of multiple flashes, and when putting the bottle in motion it makes that the prepared cocktail acquires a particular dynamism, which is extremely attractive for consumption, specially in night clubs and discotheques. In addition, with the method of the present invention properties of the based sparkling wine in the prepared cocktail are kept.

## Description

The present invention refers to the food industry. More specifically, the present invention refers to a method for preparation of cocktails which are based on sparkling wine, such as Cava, whereby it is possible to obtain at industrial cocktails containing edible gold in suspension, with a visual appearance of multiple flashes, and when putting the bottle in motion it makes that the prepared cocktail acquires a particular dynamism, which is extremely attractive for consumption, specially in night clubs and discotheques. In addition, with the method of the present invention properties of the based sparkling wine in the prepared cocktail are kept.

Manufacturing process of sparkling wines is a complex process. The grapes are harvested, which can be done by hand or by machine, with the required care and speed in transport. Then, grapes are pressed and, for example, in case of producing Cava, only the free run juice obtained from the first press fractions is used, as this is the grape juice with the highest quality. This grape juice is chilled and clarified, which is an operation which consists of separating solid particles (pulp) that may have been transferred to the free run juice.

The grape juice obtained is transformed into wine in a first alcoholic fermentation, which takes places at a controlled temperature between 15°C and 18°C for 20 to 25 days. Once the fraction of the must is clear, selected yeasts are added to begin the fermentation. During this process, the yeasts transform natural sugar contained in the grapes into alcohol and carbon dioxide obtaining mono varietal base cava wines.

Then, the oenologist is responsible for selecting and blending the base wines obtained after the fermentation process in a combination of technical expertise, experience and art. At this time, the oenologist must take into account several parameters depending on the type of sparkling wine to be made, such as fruity flavours, balance in the mouth, body and structure, acidity to go through a long aging, etc.

Clarification consists in getting rid of murky aspect caused by the presence of particles in suspension proceeding from the fermentation in order to obtain a completely clear wine free of any impurities. Prior to tirage, the wine is cooled in order to precipitate the tartaric acid in the form of salts.

In order to preserve the wine and maintain its qualities throughout time, it is cold stabilised prior to the second fermentation.

The tirage is an operation that consist in filling up the bottles with the base wine and the so-called "tirage liquor", made up of yeasts and sugar. This will cause a second fermentation that takes place inside the bottle. The bottles are closed and they are taken down to the darkness of the caves (or underground galleries), where they will be stacked horizontally. This is the stage prior to the second fermentation in the same bottle that will reach the final consumer. Upon completion of the second fermentation, the yeasts die and settle at the bottom of the bottle. This is the moment when aging begins.

Aging is the time of contact of the yeasts with the sparkling wine. The minimum is 9 months, though there is no maximum time. An interesting phenomenon which takes place after 15 months of aging is called autolysis, whereby the yeasts cells conforming the lees begin to contribute components to the sparkling wine, providing tertiary aromas such as dried fruits, coast, bakery, toffee, caramel, etc. This process provides more complexity to the sparkling wine and it is a characteristic of reserve and grand reserve sparkling wines.

Then, the step of riddling is carried out, which consist of moving the sediments (dead yeast cells) caused by the second fermentation to the neck of the bottle. Riddling can either be done by hand or by machine. A successive rotational movement, rattle and tilt is done until the yeasts reach the neck of the bottle and can easily be removed at a further disgorging step.

Aging is the time of contact of the yeasts with the sparkling wine. The minimum is 9 months, though there is no maximum time. An interesting phenomenon which takes place after 15 months of aging is called autolysis, whereby the yeasts cells conforming the lees begin to contribute components to the sparkling wine, providing tertiary aromas such as dried fruits, coast, bakery, toffee, caramel, etc. This process provides more complexity to the sparkling wine and it is a characteristic of reserve and grand reserve sparkling wines.

Then, the step of riddling is carried out, which consist of moving the sediments (dead yeast cells) caused by the second fermentation to the neck of the bottle. Riddling can either be done by hand or by machine. A successive rotational movement, rattle and tilt is done until the yeasts reach the neck of the bottle and can easily be removed at a further disgorging step.

Usually, cocktails consisting mainly of sparkling wine must be prepared *in situ* in the same cup or glass in which it will be consumed. Industrial preparation of cocktails based on sparkling wine has the drawback that carbonic gas produced in fermentations during the process for obtaining sparkling wine could be partially or totally released from said sparkling wine depending on additives to be added to the same, and also depending on other parameters such as temperature. This fact makes the prepared cocktail could loose organoleptic properties as well as a volume decrease and the characteristic bouquet of sparkling wines.

The present inventor has developed a method at industrial scale for preparing cocktails based on sparkling wines. With the method of the present invention a specific mixture of food additives is made, which makes said cocktail having a surprisingly visual effect of golden particle in suspension, which is extremely attractive for consumption, specially in closed premises with artificial light. In addition, cocktails prepared using the method of the present invention keep all the properties of the based sparkling wine.

Therefore, the present invention provides a method for preparation of sparkling wine cocktails containing edible gold comprising the steps of:
a) taking a volume between 700 and 800 ml of based sparkling wine;
b) adjusting temperature of said based sparkling wine between 2°C and 20°C;
c) preparing a mixture comprising edible gold (code E-175) in an amount of said edible gold between 0.5 mg and 500 mg, sweetener, flavour, preservatives and, optionally, other food colorants;
d) adding the mixture prepared is step c) to the based sparkling wine; and
e) filling, closing, capsulation and labelling of bottles.

The based sparkling wine of step a) can be obtained from a production step of a wine with sparkling fermentation, also known as gasified wines of endogenous origin, for example, from the disgorging step mentioned above. Furthermore, said sparkling wine of step a) can be a quiet wine with exogenous gasification, to which more carbonic gas is added in addition to the gas of endogenous origin. In the first case, the starting material is moved to a new bottle and the method of the present invention is followed. In the second case, it is likely that it will be necessary to add a process step of adjusting the alcohol content by dilution, and it will be necessary to add a gasification step, i.e., injection of carbon dioxide to the based sparkling wine.

Preferably, the based sparkling wine is Cava.

In the mixture prepared in step c) of the method of the present invention either liquid sugar or any other liquid sweetener used in the food industry can be used.

In addition, in the mixture prepared in step c), a person skilled in the art knows the types of flavours that can be added to the cocktail prepared according to the method of the present invention. For example, one or more flavours mentioned in the article 1, section 2, letter a) of the Council Directive 88/388/CE can be added.

It is obvious to the skilled person that volume of the based sparkling wine mentioned in the method of the present invention may vary, i.e., if preparation of a greater or lesser volume is desired, proportions mentioned in the method of the present invention should be kept, to achieve the desired technical effect in the prepared cocktail.

The present invention is described below based on examples which are not a limitation of the present invention, and based on the following figures, in which:

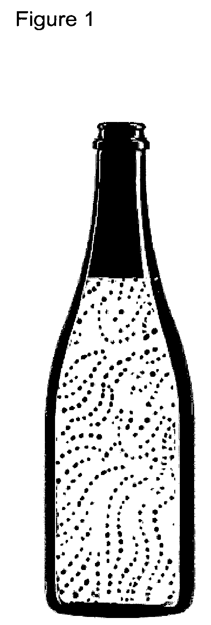

Figure 1 is a drawing of a bottle of the type containing sparkling wines such as Cava or Champagne, containing a cocktail prepared according the method of the present invention. When the bottle is shaken, gold particles in suspension can be observed inside the bottle, with different movement effects. This effects are enhanced when the bottle is illuminated with natural, and specially white artificial light in closed spaces.

### EXAMPLES

Example 1. Preparation of a turquoise coloured cocktail with gold according to the method of the present invention.

In this example, a sparkling wine cocktail turquoise coloured, with edible gold particles (E-175) in suspension was prepared. 750 ml of Cava were adjusted to a temperature of 18°C. On the other hand, a mixture containing 10 ml of liquid sweetener, 8 mg of Brilliant Blue FCF (E-133), 18 ml of Curaçao liquor, and 23 mg of edible gold (E-175) was prepared. This mixture was added to the Cava, and once the bottle is closed, the mixture was stirred to colour homogeneity. A cocktail with turquoise blue colour was obtained, and when the bottle containing the same is put in motion, gold particles glow in many different manners. In addition, the prepared cocktail keeps the Cava bouquet with a slight taste to Curaçao liquor.

Example 2. Preparation of a cocktail with gold according to the method of the present invention.

In this example a sparkling wine cocktail with the traditional colour of wine, with edible gold (E-175) particles in suspension was prepared. 750 ml of Cava were adjusted to a temperature of 16°C. On the other hand, a mixture containing 20 ml of liquid sweetener, and 23 mg of edible gold (E-175) was prepared, and then this mixture was added to the Cava. Once the bottle is closed, the mixture was stirred to homogeneity. A cocktail with gold was obtained, and when the bottle containing the same is put in motion, gold particles glow in many different manners.

## Claims

1. Method for producing sparkling wine cocktails containig edible gold, **characterized in that** it comprises the steps of:
a) taking a volume between 700 and 800 ml of based sparkling wine;
b) adjusting temperature of said based sparkling wine between 2°C and 20°C;
c) preparing a mixture comprising edible gold (code E-175) in an amount of said edible gold between 0.5 mg and 500 mg, sweetener, flavour, preservatives and, optionally, other food colorants;
f) adding the mixture prepared is step c) to the based sparkling wine; and
g) filling, closing, capsulation and labelling of bottles.

2. Method, according to claim 1, **characterized in that** the based sparkling wine is a gasified wine of endogenous origin.

3. Method, according to claim 2, **characterized in that** the based sparkling wine is a Cava.

4. Method, according to claim 1, **characterized in that** the based sparkling wine is a wine with exogenous gasification.

5. Method, according to claim 4, **characterized in that** the method comprises a further step of injection of carbon dioxide.
